# FASCICULE DE BREVET EUROPEEN

(11) **EP 2 566 758 B1**
(45) Date de publication et mention de la délivrance du brevet: **19.03.2014**
(21) Numéro de dépôt: 11723577.0
(22) Date de dépôt: 05.05.2011
(51) Int. Cl.: B64G 1/64, F16B 31/00, F16B 37/08

(54) **DISPOSITIF DE DEVERROUILLAGE DECLENCHE, RELIANT DEUX SOUS-ENSEMBLES DETACHABLES**
AUSLÖSBARE VERRIEGELUNGSVORRICHTUNG ZUM VERBINDEN VON ZWEI TRENNBAREN BAUGRUPPEN
SEPARABLE CONNECTION DEVICE, CONNECTING TWO DETACHABLE SUB-ASSEMBLIES

(30) Priorité: 07.05.2010 FR 1053609
(43) Date de publication de la demande: 13.03.2013
(73) Titulaire: PYROALLIANCE, 78130 Les Mureaux (FR)
(72) Inventeur: LENOIR, Charlotte, 78955 Carrieres sous Poissy (FR); HAGUENAUER, Bertrand, 78170 La Celle Saint-Cloud (FR); FORYS, Christian, 95430 Auvers sur Oise (FR)
(74) Mandataire: Intès, Didier Gérard André
(86) Numéro de dépôt international: PCT/FR2011/051026
(87) Numéro de publication internationale: WO 2011/138566

(56) Documents cités:
- EP-A1- 0 296 936
- FR-A1- 2 807 123
- US-A- 4 187 759

## Description

L'invention se rapporte à un dispositif de déverrouillage déclenché, par lequel sont assemblés deux sous-ensembles, ledit dispositif étant apte, après déclenchement, à provoquer leur séparation. Le déclenchement est typiquement provoqué par l'allumage d'un générateur de gaz pyrotechnique. L'invention vise une simplification technologique d'un tel type de dispositif et une amélioration de sa fiabilité.

Un domaine d'application privilégié de l'invention est celui de la séparation d'objets tel qu'un satellite par rapport à une structure porteuse, pour placer ledit satellite sur son orbite à partir d'une fusée. Le dispositif permet de déverrouiller le satellite de son support et de l'en écarter rapidement.

On connaît de FR 2 807 123 un dispositif du genre indiqué ci-dessus qui comprend essentiellement un générateur de gaz, un corps dans lequel est définie une chambre d'expansion des gaz émis par le générateur de gaz, un écrou segmenté agencé à l'intérieur d'un manchon de libération mobile dans ledit corps et une vis de liaison dont une partie filetée est engagée dans l'écrou. Les deux sous-ensembles à séparer sont assemblés entre le corps et la tête de vis. En se déplaçant longitudinalement après le déclenchement, c'est-à-dire l'introduction de gaz sous pression dans ladite chambre d'expansion, le manchon autorise les segments de l'écrou à s'écarter les uns des autres, ce qui provoque la libération instantanée (sans dévissage) de ladite vis de liaison.

Cette vis est expulsée au moyen d'un éjecteur axial lui-même propulsé par les gaz.

La spécificité d'un tel système réside dans le fait que le déclenchement du dispositif de verrouillage permet, dans une phase préliminaire, de créer un dispositif d'amortissement destiné à freiner efficacement le manchon de libération avant qu'il atteigne une butée mécanique rigide, ce qui générerait un choc important et sans ralentir de façon sensible le fonctionnement du dispositif. De cette manière, en évitant un choc mécanique brutal, les équipements assujettis à la structure en liaison avec l'écrou sont préservés. Les deux sous-ensembles sont ainsi séparés d'une façon nette mais non brutale. En effet, cette séparation doit intervenir dans un temps très bref. Il serait donc inopportun de ralentir le mécanisme de fonctionnement du dispositif dans le seul but d'éviter ce choc mécanique de fin de course. Les moyens d'amortissement appropriés décrits dans le document indiqué ci-dessus permettent d'éviter toute perturbation due à un choc brutal tout en maintenant le dispositif de déverrouillage à un haut niveau de performance, notamment en ce qui concerne son temps de réponse.

Cependant, le dispositif antérieur est complexe et coûteux tant par l'agencement des moyens d'amortissement que par la présence de l'éjecteur axial. L'invention propose un dispositif plus simple et de performances au moins équivalentes où la course du manchon de libération est contrôlée tout en évitant un choc de fin de course brutal, l'éjecteur étant par ailleurs supprimé.

Plus particulièrement, l'invention concerne un dispositif de déverrouillage déclenché reliant deux sous-ensembles détachables, comprenant un corps, une chambre d'expansion définie dans ledit corps et recevant les gaz émis par un générateur de gaz, lors du déclenchement de ce dernier, un écrou segmenté formé de segments accolés longitudinalement avant ledit déclenchement pour reconstituer un alésage taraudé, un manchon de libération dudit écrou segmenté disposé autour dudit écrou et conformé pour coulisser dans un alésage dudit corps et pour permettre l'écartement desdits segments lors dudit déclenchement, une vis de liaison dont une partie filetée est engagée dans ledit écrou, lesdits sous-ensembles étant assemblés entre ledit corps et ladite vis de liaison et un poussoir formant piston monté avec possibilité de coulissement dans un alésage axial dudit manchon de libération et comportant une extrémité d'actionnement conformée pour coopérer avec des surfaces d'extrémité desdits segments, caractérisé en ce qu'il comporte en outre une chambre motrice définie entre ledit corps et une paroi d'extrémité dudit manchon de libération jouxtant ladite chambre d'expansion, en ce qu'une chambre d'amortissement communiquant avec ladite chambre d'expansion est définie à l'intérieur d'un alésage dudit manchon de libération entre une paroi de fond de celui-ci et l'extrémité dudit poussoir opposée à ladite extrémité d'actionnement et en ce que des passages calibrés sont définis dans la paroi latérale dudit manchon de libération entre ladite chambre d'amortissement et ladite chambre motrice.

Avantageusement, l'agencement est tel que, au début de la course dudit manchon, la chambre motrice ne communique avec la chambre d'expansion que par l'intermédiaire de ladite chambre d'amortissement, et par conséquent via lesdits passages calibrés, de faible section.

Par exemple, le manchon de libération comporte un prolongement formant un conduit débouchant dans la chambre d'amortissement et engagé à coulissement dans un alésage d'une paroi dudit corps séparant ladite chambre d'expansion de ladite chambre motrice.

Eventuellement, il y a mise en communication directe entre la chambre d'expansion et la chambre motrice lorsque le manchon de libération se déplace. Ceci dépend de la longueur du prolongement du manchon de libération engagé à coulissement dans un alésage d'une paroi dudit corps.

Selon une autre caractéristique, la chambre motrice comporte une partie annulaire définie par un épaulement dudit corps, qui prolonge, en l'élargissant, l'alésage du corps dans lequel coulisse ledit manchon de libération. Les passages calibrés précités sont espacés le long de la paroi latérale dudit manchon pour permettre une réduction de la section de passage des gaz entre ladite chambre d'amortissement et ladite chambre motrice au fur et à mesure du déplacement du manchon de libération, c'est-à-dire au fur et à mesure que ces passages calibrés sont obturés en passant au-delà dudit épaulement.

Eventuellement, le poussoir comporte un obturateur faisant saillie dans ladite chambre d'amortissement et conformé et dimensionné pour s'engager et obturer ledit conduit dudit manchon de libération, en fin de course de ce dernier. Cette option peut s'appliquer dans le cas où l'amortissement s'avérerait trop important ou le pouvoir moteur, ainsi défini, s'avérerait trop faible.

L'invention sera mieux comprise et d'autres avantages de celle-ci apparaitront plus clairement à la lumière de la description qui va suivre d'un mode de réalisation d'un dispositif de déverrouillage conforme à son principe, donnée uniquement à titre d"exemple et faite en référence aux dessins annexés dans lesquels :
- la figure 1 est une vue en élévation et en coupe du dispositif, avant déclenchement, reliant deux sous-ensembles détachables ; et
- les figures 2 à 5 sont des vues schématiques illustrant les différentes phases de fonctionnement du dispositif, après déclenchement du générateur de gaz.

En se reportant aux dessins, on a représenté très schématiquement deux sous-ensembles 11, 12 assemblés par un système à actionnement pyrotechnique ci-après dénommé "dispositif de déverrouillage déclenché" 13 puisque sa fonction est de permettre la séparation rapide des deux sous-ensembles après les avoir maintenu assemblés, avant déclenchement d'un générateur de gaz.

Plus précisément, ledit dispositif de déverrouillage 13 comprend un corps 14 abritant un générateur de gaz 15, ici à actionnement pyrotechnique, un écrou segmenté 17 formé de segments 17a accolés longitudinalement (avant ledit déclenchement pyrotechnique) pour reconstituer un alésage taraudé 18 et une vis de liaison 21 dont une partie filetée est engagée dans cet alésage taraudé 18 de l'écrou.

Comme représenté, avant déclenchement, les deux sous-ensembles 11, 12 sont assemblés serrés entre le corps 14 et la vis de liaison 21. La tête de vis 22 prend appui sur le sous-ensemble 12, la vis traverse deux trous alignés des sous-ensembles 11 et 12 et est vissée dans l'écrou 17. Le corps 14 comporte une embase 23 vissée sur le sous-ensemble 11. Il est globalement cylindrique et creux et se compose d'un tronçon médian 24, d'un socle 26 et d'un capuchon 27. Ledit tronçon médian 24 est prolongé par l'embase 23. Il comporte un filetage externe 30 et un filetage interne 31. Ce dernier reçoit le socle 26 qui est fileté extérieurement et qui vient se loger au voisinage de l'embase 23. Le socle 26 comporte un alésage 33, ici axial pour le passage de la vis et une gorge annulaire 25. Une margelle annulaire 35 est définie entre l'alésage 33 et la gorge 25. Les segments de l'écrou 17 reposent sur cette margelle, avant déclenchement.

le capuchon 27 est fileté intérieurement et vissé sur le filetage externe 30 du tronçon médian avec interposition d'un joint d'étanchéité 37. Cette partition du corps 14 en trois éléments est dictée par la nécessité de définir de façon simple plusieurs épaulements à l'intérieur du corps, qui seront décrits plus loin, tout en permettant un montage facile des autres éléments constitutifs.

Le corps 14 ainsi défini abrite en outre un manchon de libération 40, apte à coulisser axialement dans le corps et un poussoir 42 formant piston monté avec possibilité de coulissement dans un alésage axial 43 dudit manchon de libération. Ce poussoir comporte une extrémité d'actionnement conformée pour coopérer avec des surfaces d'extrémité des segments de l'écrou. Plus précisément, cette extrémité forme une tête à paroi tronconique 45 prenant appui sur des surfaces tronconiques inverses 47 définies aux extrémités en regard des segments 17a de l'écrou. Ladite tête 45 est sollicitée en appui contre lesdites surfaces tronconiques inverses 47 par un ressort 49 monté avec précontrainte entre un épaulement interne du manchon de libération 40 et un épaulement du poussoir 42.

Par ailleurs, l'écrou 17 comporte deux nervures périphériques externes 52a, 52b distantes axialement (par conséquent segmentées comme l'écrou lui-même) tandis que le manchon de libération 40 comporte aussi deux nervures périphériques internes 54a, 54b sur lesquelles les nervures de l'écrou prennent respectivement appui, lorsque l'écrou est reconstitué en tant que tel (c'est-à-dire avant déclenchement) et qu'il retient la vis 21. La nervure 54a définie à une extrémité du manchon est susceptible de s'engager dans la gorge annulaire 25 du socle.

Avant déclenchement, le manchon de libération 40 est en appui sur un épaulement interne 56 du tronçon médian du corps, sous l'action du ressort 49.

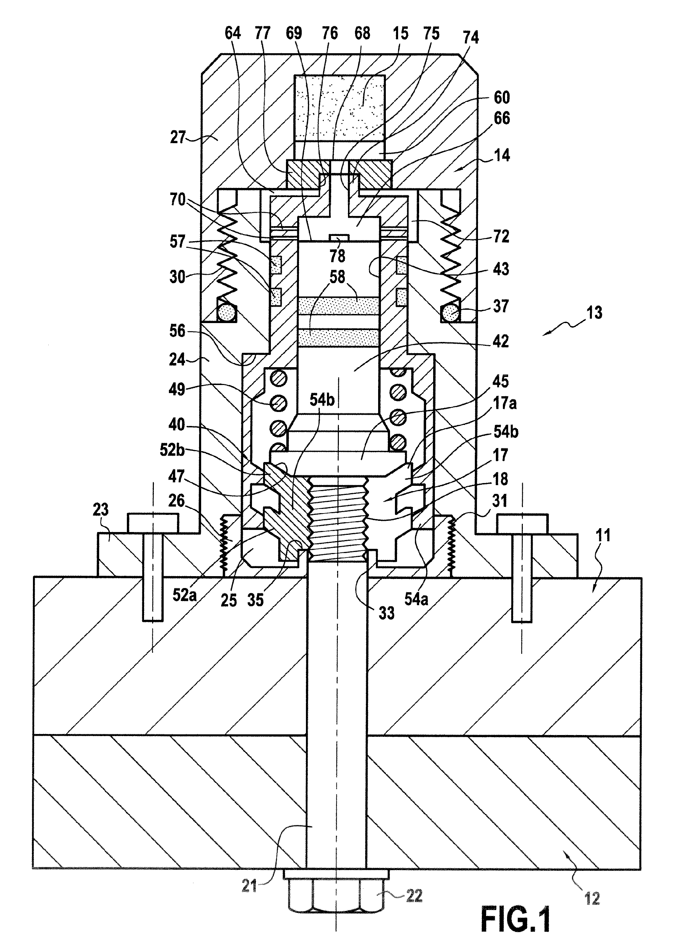

On comprend, à ce stade de la description, que, si le manchon de libération 40 se déplace (vers le bas en considérant la figure 1), son extrémité s'engage dans la gorge annulaire 25 du socle qui se trouve dans le prolongement de l'alésage de coulissement du manchon de libération. Ce faisant, les contacts entre les nervures extérieures 52a, 52b de l'écrou et les nervures intérieures 54a, 54b du manchon, respectivement, disparaissent et les segments de l'écrou s'écartent brusquement radialement vers l'extérieur sous la sollicitation du poussoir 42, en libérant quasi instantanément la vis 21.

Le manchon de libération porte deux joints d'étanchéité coulissants 57 en contact avec la partie de moindre diamètre de l'alésage défini dans le tronçon médian 25 du corps. Le poussoir 42 porte aussi deux joints d'étanchéité coulissants 58, en contact avec la paroi interne du manchon de libération.

Le générateur de gaz 15 est logé dans le capuchon 27 du corps. Il s'agit ici d'un générateur de gaz comprenant une charge à actionnement pyrotechnique. Sa sortie d'expulsion de gaz communique avec une chambre d'expansion de gaz 60 définie dans le prolongement du générateur de gaz.

De plus, les différents sous-ensembles décrits jusqu'à présent sont conformés de façon que le dispositif comporte en outre une chambre motrice 64 définie entre ledit corps et une paroi d'extrémité dudit manchon de libération qui jouxte la chambre d'expansion ainsi qu'une chambre d'amortissement 66 communiquant avec ladite chambre d'expansion. Cette chambre d'amortissement 66 est définie à l'intérieur de l'alésage du manchon de libération entre une paroi de fond 68 de celui-ci et l'extrémité 69 du poussoir 42 opposée à ladite extrémité d'actionnement coopérant avec l'écrou. De plus, des passages calibrés 70 sont définis dans la paroi latérale du manchon de libération 40 entre ladite chambre d'amortissement 66 et ladite chambre motrice 64.

Plus précisément, cette chambre motrice 64 comporte une partie annulaire 72 définie par un épaulement du corps 14, prolongeant en l'élargissant l'alésage du corps dans lequel coulisse ledit manchon de libération. Les passages calibrés 70 sont espacés le long de la paroi latérale de ce manchon. Ces passages calibrés 70, parallèles, sont espacés suivant la direction axiale du manchon de libération en sorte qu'ils sont obturés successivement au fur et à mesure du déplacement du manchon de libération, pour permettre une réduction de la section de passage des gaz entre la chambre d'amortissement 66 et la chambre motrice 64, au fur et à mesure de ce déplacement.

En outre, ledit manchon de libération 40 comporte un prolongement 74 formant un conduit 75 qui débouche dans la chambre d'amortissement 64 et ce prolongement est engagé à coulissement dans un alésage 76 d'une paroi 77 séparant ladite chambre d'expansion 60 de ladite chambre motrice 64. Par conséquent, au début de la course dudit manchon de libération, ladite chambre motrice 64 ne communique avec la chambre d'expansion 60 que par l'intermédiaire de la chambre d'amortissement 66 via les passages calibrés 70.

Dans cet exemple, le poussoir 42 comporte un obturateur 78, faisant saillie dans ladite chambre d'amortissement et conformé et dimensionné pour s'engager et obturer le conduit 75 dudit manchon de libération, en fin de course de ce dernier, pour établir une liaison directe et unique entre ladite chambre d'expansion des gaz 60 et ladite chambre motrice 64. Cette option est avantageuse dans le cas d'un amortissement important ou d'un pouvoir moteur faible comme indiqué plus haut.

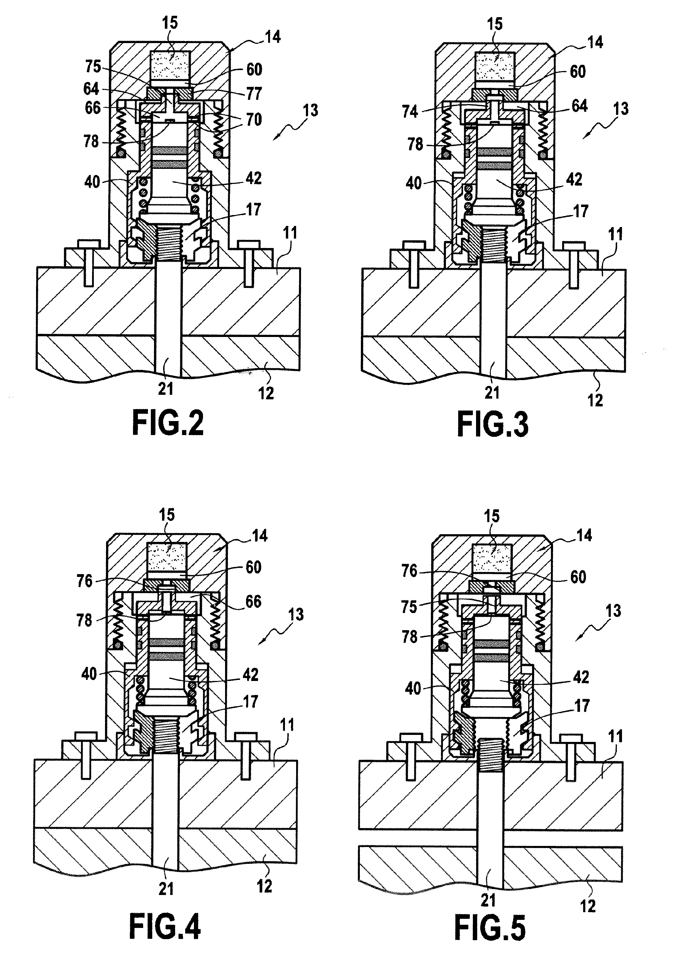

Le fonctionnement résulte avec évidence de la description qui précède et va être maintenant décrit en référence aux figures 2 à 5.

Avant déclenchement pyrotechnique et au tout début de la course du manchon de libération 40, le prolongement formant un conduit 75 défini à l'extrémité du manchon de libération est engagé dans la paroi 77 délimitant la chambre d'expansion des gaz ; c'est la situation illustrée sur la figure 2. Aussitôt après déclenchement, les gaz pénètrent dans la chambre d'amortissement 66 et traversent les orifices calibrés 70 pour pouvoir agir sur la face d'extrémité du manchon de libération 40. La forte expansion des gaz ne se traduit donc pas par un déplacement brutal du manchon de libération en raison des restrictions d'écoulement des gaz au travers des passages calibrés 70. De plus, comme on le voit sur la figure 3, au fur et à mesure du déplacement du manchon de libération 40, le nombre de passages calibrés 70 au travers desquels les gaz pénètrent dans ladite chambre motrice, diminue, ce qui contribue à maîtriser le déplacement du manchon de libération. Puis, lorsque tous les passages calibrés 70 sont obturés, (figure 4), il n'y a plus de communication entre la chambre d'amortissement 66 et la chambre motrice 64. Selon l'exemple, le prolongement 74 du manchon de libération se dégage de l'alésage 76, ce qui permet d'établir une liaison directe entre la chambre d'expansion 60 et la chambre motrice 64. En outre, l'obturateur 78 faisant saillie dans la chambre d'amortissement s'engage et obture le conduit 75 du manchon de libération, ce qui permet d'assurer une pression motrice suffisante pour terminer le mouvement. Pendant ce temps, les segments 17a de l'écrou 17 s'écartent et libèrent la vis 21, ce qui permet la séparation des deux sous-ensembles 11, 12.

Selon un autre mode de réalisation possible qui dépend des conditions d'amortissement et du pouvoir moteur du générateur de gaz, il n'y a pas de mise en communication directe entre la chambre d'expansion des gaz 60 et la chambre motrice 64 lorsque le manchon de libération 40 se déplace. Ceci dépend de la longueur du prolongement 74.

## Revendications

1. Dispositif de déverrouillage déclenché reliant deux sous-ensembles (11, 12) détachables, comprenant un corps (14), une chambre d'expansion (60) définie dans ledit corps et recevant les gaz émis par un générateur de gaz (15), lors du déclenchement de ce dernier, un écrou segmenté (17) formé de segments (17a) accolés longitudinalement avant ledit déclenchement pour reconstituer un alésage taraudé, un manchon de libération (40) dudit écrou segmenté disposé autour dudit écrou et conformé pour coulisser dans un alésage dudit corps et pour permettre l'écartement desdits segments lors dudit déclenchement, une vis de liaison (21) dont une partie filetée est engagée dans ledit écrou, lesdits sous-ensembles étant assemblés entre ledit corps (14) et ladite vis de liaison (21) et un poussoir (42) formant piston monté avec possibilité de coulissement dans un alésage axial dudit manchon de libération (40) et comportant une extrémité d'actionnement conformée pour coopérer avec des surfaces d'extrémité desdits segments, **caractérisé en ce qu'**il comporte en outre une chambre motrice (64) définie entre ledit corps et une paroi d'extrémité dudit manchon de libération jouxtant ladite chambre d'expansion, **en ce qu'**une chambre d'amortissement (66) communiquant avec ladite chambre d'expansion est définie à l'intérieur d'un alésage dudit manchon de libération entre une paroi de fond de celui-ci et l'extrémité dudit poussoir opposée à ladite extrémité d'actionnement et **en ce que** des passages calibrés (70) sont définis dans la paroi latérale dudit manchon de libération entre ladite chambre d'amortissement et ladite chambre motrice.

2. Dispositif selon la revendication 1, **caractérisé en ce que** ledit manchon de libération comporte un prolongement formant un conduit (75) débouchant dans la chambre d'amortissement et engagé à coulissement dans un alésage (76) d'une paroi dudit corps séparant ladite chambre d'expansion (60) de ladite chambre motrice (64), en sorte que au début de la course dudit manchon, ladite chambre motrice (64) ne communique avec la chambre d'expansion que par l'intermédiaire de ladite chambre d'amortissement (66).

3. Dispositif selon la revendication 2, **caractérisé en ce que** ledit poussoir comporte un obturateur (78) axial faisant saillie dans ladite chambre d'amortissement et conformé et dimensionné pour s'engager et obturer ledit conduit (75) dudit manchon de libération, en fin de course de ce dernier, pour établir une liaison directe et unique entre ladite chambre d'expansion et ladite chambre motrice.

4. Dispositif selon l'une des revendications précédentes, **caractérisé en ce que** ladite chambre motrice comporte une partie annulaire (72) définie par un épaulement dudit corps, prolongeant en l'élargissant ledit alésage du corps dans lequel coulisse ledit manchon de libération (40) et **en ce que** des passages calibrés précités (70) sont espacés le long de la paroi latérale dudit manchon pour permettre une réduction de la section de passage des gaz entre ladite chambre d'amortissement (66) et ladite chambre motrice (64) au fur et à mesure du déplacement dudit manchon de libération.

5. Dispositif selon l'une des revendications précédentes, **caractérisé en ce qu'**un ressort (49) est logé entre ledit manchon de libération et ladite extrémité d'actionnement dudit poussoir (42).

## Patentansprüche

1. Vorrichtung zur ausgelösten Entriegelung, die zwei lösbare Untereinheiten (11, 12) verbindet, umfassend einen Körper (14), eine Expansionskammer (60), die in dem Körper definiert ist und die von einem Gasgenerator (15) beim Auslösen dieses letztgenannten ausgesandten Gase aufnimmt, eine Segmentmutter (17), die von Segmenten (17a) gebildet ist, die vor dem Auslösen längs zusammengefügt werden, um eine Gewindebohrung nachzustellen, eine Muffe (40) zur Freigabe der Segmentmutter, die um die Mutter angeordnet und derart ausgeführt ist, dass sie in einer Bohrung des Körpers gleitet und die Beabstandung der Segmente beim Auslösen ermöglicht, eine verbindungsschraube (21), deren Gewindeteil in der Mutter in Eingriff ist, wobei die Untereinheiten zwischen dem Körper (14) und der Verbindungsschraube (21) zusammengefügt sind, und einen Schieber (42), der einen Kolben bildet, der mit der Möglichkeit des Gleitens in einer Axialbohrung der Freigabemuffe (40) montiert ist und ein Betätigungsende umfasst, das dazu ausgeführt ist, mit Endflächen der Segmente zusammenzuwirken, **dadurch gekennzeichnet, dass** sie ferner eine Antriebskammer (64) umfasst, die zwischen dem Körper und einer Endwand der Freigabemuffe, die die Expansionskammer anbindet, definiert ist, dass eine Dämpfungskammer (66), die mit der Expansionskammer in Verbindung steht, im Inneren einer Bohrung der Freigabemuffe zwischen einer Bodenwand derselben und dem Ende des Schiebers gegenüber dem Betätigungsende definiert ist, und dass geeichte Durchgänge (70) in der Seitenwand der Freigabemuffe zwischen der Dämpfungskammer und der Antriebskammer definiert sind.

2. Vorrichtung nach Anspruch 1, **dadurch gekennzeichnet, dass** die Freigabemuffe eine Verlängerung umfasst, die eine Leitung (75) bildet, die in die Dämpfungskammer mündet und gleitend in eine Bohrung (76) einer Wand des Körpers eingreift, die die Expansionskammer (60) von der Antriebskammer (64) trennt, so dass am Anfang des Hubs der Muffe die Antriebskammer (64) mit der Expansionskammer nur über die Dämpfungskammer (66) in Verbindung steht.

3. Vorrichtung nach Anspruch 2, **dadurch gekennzeichnet, dass** der Schieber ein axiales Verschlusselement (78) umfasst, das in die Dämpfungskammer hineinragt und derart ausgeführt und dimensioniert ist, dass es in die Leitung (75) der Freigabemuffe am Anschlag eingreift und diese verschließt, um eine direkte und einzige Verbindung zwischen der Expansionskammer und der Antriebskammer herzustellen.

4. Vorrichtung nach einem der vorhergehenden Ansprüche, **dadurch gekennzeichnet, dass** die Antriebskammer einen ringförmigen Teil (72) umfasst, der durch einen Absatz des Körpers definiert ist und die Bohrung des Körpers, in dem die Freigabemuffe (40) gleitet, verlängert, wobei er sie erweitert, und dass vorgenannte geeichte Durchgänge (70) entlang der Seitenwand der Muffe beabstandet sind, um eine Verringerung des Durchgangsquerschnitts der Gase zwischen der Dämpfungskammer (66) und der Antriebskammer (64) im Zuge der Bewegung der Freigabemuffe zu ermöglichen.

5. Vorrichtung nach einem der vorhergehenden Ansprüche, **dadurch gekennzeichnet, dass** eine Feder (49) zwischen der Freigabemuffe und dem Betätigungsende des Schiebers (42) angeordnet ist.

## Claims

1. A triggered unlocking device connecting together two detachable subassemblies (11, 12), the device comprising a body (14), an expansion chamber (60) defined in said body and receiving the gas delivered by a gas generator (15) when the generator is triggered, a segmented nut (17) made up of segments (17a) touching one another longitudinally prior to said triggering in order to make up a tapped bore, a release sleeve (40) for releasing said segmented nut arranged around said nut, and shaped to slide in a bore of said body and to enable said segments to be moved apart during said triggering, a connection screw (21) having a threaded portion engaged in said nut, said subassemblies being assembled between said body (14) and said connection screw (21), and a piston-forming pusher (42) mounted so as to be capable of sliding in an axial bore of said release sleeve (40) and including an actuation end shaped to co-operate with end surfaces of said segments, the device being **characterized in that** it further comprises a drive chamber (64) defined between said body and an end wall of said release sleeve adjacent to said expansion chamber, **in that** a damping chamber (66) communicating with said expansion chamber is defined inside a bore of said release sleeve between an end wall thereof and the end of said pusher remote from said actuation end, and **in that** calibrated passages (70) are defined in the side wall of said release sleeve between said damping chamber and said drive chamber.

2. A device according to claim 1, **characterized in that** said release sleeve includes an extension forming a duct (75) opening out into the damping chamber and slidably engaged in a bore (76) of a wall of said body separating said expansion chamber (60) and said drive chamber (64), such that at the beginning of the stroke of said sleeve, said drive chamber (64) communicates with the expansion chamber solely via said damping chamber (66).

3. A device according to claim 2, **characterized in that** said pusher includes an axial shutter (78) projecting into said damping chamber and shaped and sized to engage therein and to shut off said duct (75) of said release sleeve at the end of its stroke in order to establish a single and direct connection between said expansion chamber and said drive chamber.

4. A device according to any preceding claim, **characterized in that** said drive chamber includes an annular portion (72) defined by a shoulder of said body, extending and enlarging said bore of the body in which said release sleeve (40) slides, and **in that** abovementioned calibrated passages (70) are spaced apart along the side wall of said sleeve to enable the gas flow section between said damping chamber (66) and said drive chamber (64) to be reduced progressively as said release sleeve moves.

5. A device according to any preceding claim, **characterized in that** a spring (49) is housed between said release sleeve and said actuation end of said pusher (42).
